# EUROPÄISCHE PATENTSCHRIFT

(11) **EP 2 230 744 B1**
(45) Veröffentlichungstag und Bekanntmachung des Hinweises auf die Patenterteilung: **16.05.2012**
(21) Anmeldenummer: 09003939.7
(22) Anmeldetag: 19.03.2009
(51) Int. Cl.: H02J 7/02

(54) **Schaltungsanordnung und Verfahren zur Ladeerkennung**
Switching assembly and charge detection method
Circuit et procédé destinés à la reconnaissance de chargement

(43) Veröffentlichungstag der Anmeldung: 22.09.2010
(73) Patentinhaber: Braun GmbH, 61476 Kronberg/Taunus (DE)
(72) Erfinder: Faranda, Leo, 63110 Rodgau (DE); Skopp, Frank, Stefan, 65760 Eschborn (DE); Klemm, Thorsten, 65760 Eschborn (DE)

(56) Entgegenhaltungen:
- EP-A- 0 875 978
- EP-A- 1 432 097
- US-A- 4 654 575

## Beschreibung

### Gebiet der Erfindung

Die Erfindung betrifft eine Schaltungsanordnung und ein Verfahren zur Erkennung, ob eine Ladespannung, bzw. -strom zur Verfügung steht, der beispielsweise zum Laden eines akkubetriebenen Elektrokleingeräts, vorzugsweise einer elektrischen Zahnbürste, dienen kann.

### Hintergrund der Erfindung

Aus der US 4,654,575 ist eine Schaltung mit Verpolungsanzeige zum Laden einer Batterie bekannt, deren Ladespannung aus einer Gleichspannung besteht, der ein Wechselspannungsanteil überlagert ist. Die Ladeschaltung enthält eine Einrichtung zur Detektion des Wechselspannungsanteils und eine rote LED, die dann leuchtet, wenn der Wechselspannungsanteil detektiert wird. Dies ist nur dann der Fall, wenn die Ladeschaltung unter Spannung steht und die Batterie nicht an die Ladeschaltung angeschlossen ist. Die leuchtende rote LED soll einen Benutzer davon abhalten, die Batterie mit der unter Spannung stehenden Ladeschaltung zu verbinden. Stattdessen soll der Benutzer zuerst die Ladeschaltung spannungslos machen (rote LED geht aus), und dann die Batterie an die Ladeschaltung anschließen. Schließt er die Batterie mit der richtigen Polung an, leuchtet eine grüne LED. Dies soll dem Benutzer anzeigen, daß er erst jetzt die Ladeschaltung gefahrlos unter Spannung setzen kann.

Elektrische akkubetriebene Geräte, beispielsweise Elektrokleingeräte wie Zahnbürsten oder Rasierapparate, werden üblicherweise an einer Geräte-externen Ladestation aufgeladen. Während des Ladevorgangs können dann bestimmte Funktionen in Gang gesetzt werden, wie z.B. eine Ladekontrollanzeige, oder unterdrückt werden, wie das Einschalten der Zahnbürste. Daher existiert die Anforderung, zu jedem Zeitpunkt erkennen zu können, ob sich das Gerät auf der Ladestation befindet oder nicht. Hierfür ist üblicherweise eine mehr oder weniger komplexe Logik im Gerät vorgesehen, welche das Vorhandensein einer Ladespannung für den Akkumulator auswertet. Diese Logik kann - muss aber nicht - getrennt von Schaltungskomponenten sein (Ladestrom-Schalter und Steuerlogik), welche den Ladevorgang selbst steuern. Weil die Ladegeräte üblicherweise eher einer idealen Stromquelle als einer idealen Spannungsquelle gleichen, sinkt die Ladespannung unter Belastung - also wenn Ladestrom fließt - deutlich unter dem Wert im Leerlauf ab. Speziell bei Geräten mit kleinen Akkumulator-Zellenspannungen reicht diese Ladespannung dann kaum noch aus, um von einer Logik zuverlässig ausgewertet zu werden.

Bekannt ist, von dem Ladestromkreis auf der Quellenseite des Ladestrom-Schalters über einen ohmschen Spannungsteiler die Ladespannung abzugreifen, die veränderlich in Abhängigkeit vom Ladestromfluss ist. Ist Ladespannung vorhanden, befindet sich also der Ladestromkreis im Leerlauf, so ist der Betrag der Ladespannung maximal, fließt ein Ladestrom, so sinkt die Ladespannung ab. Die Auswertung erfolgt mittels eines Mikrocontrollers. Nachteilig hieran ist, dass über den ohmschen Spannungsteiler ständig Strom fließt, was zu einem dauerhaften Energieverbrauch führt.

### Aufgabe der Erfindung

Aufgabe der vorliegenden Erfindung ist es, eine Schaltungsanordnung bereitzustellen, welches eine Ladeerkennung ohne großen Aufwand ermöglicht.

### Lösung

Diese Aufgabe wird durch die Vorrichtungen und Verfahren gemäß den Ansprüchen gelöst.

Bereitgestellt wird demnach eine Schaltungsanordnung, aufweisend: eine Energiequelle, welche eine Ladespannung zum Laden eines elektrischen Energiespeichers in einem Ladekreis bereitstellen kann, wenn sie mit einer Energieversorgung gekoppelt ist, wobei die Ladespannung durch eine Wechselgröße repräsentierbar ist, einen Kondensatorkreis mit einem ersten Kondensatorelement, einem ersten Ventilelement und der Energiequelle, wobei das erste Kondensatorelement durch die Energiequelle über das erste Ventilelement geladen wird, wenn die Ladespannung negativ ist, so dass, wenn die Ladespannung positiv ist, im Kondensatorkreis die Spannung über dem ersten Kondensatorelement vorzeichenmäßig die gleiche Orientierung hat wie die Ladespannung, und die Spannung über dem Kondensatorelement und der Energiequelle durch eine Steuervorrichtung erfaßbar ist. Der erfaßbare Ladekennungspegel U_{CD} ist unabhängig davon, ob im Ladekreis Strom fließt oder nicht, d.h. ein Ladetransistor durchgeschaltet ist oder nicht.

Während der negativen Halbwelle der Ladespannung wird also das erste Kondensatorelement über das erste Ventilelement aufgeladen. Während der positiven Halbwelle der Ladespannung sperrt das erste Ventilelement, so dass das erste Kondensatorelement hierüber nicht entladen werden kann. Im Kondensatorkreis (also in der Masche umfassend die Energiequelle, das erste Kondensatorelement und das erste Ventilelement) hat die durch die Ladung hervorgerufene Spannung über dem Kondensatorelement demnach vorzeichenmäßig die gleiche Orientierung wie die Ladespannung während der positiven Halbwelle. Für das Ladekennungssignal (das über dem ersten Ventilelement abgegriffen werden kann) wirkt das erste Kondensatorelement zusammen mit dem ersten Ventilelement verstärkend. Ist die Ladespannung null, was gleichbedeutend mit "Gerät nicht an Ladestation" ist, so ist das Ladekennungssignal ebenfalls null.

Sofern keine Maßnahmen zur Spannungsbegrenzung vorgesehen werden, lässt sich ein Spannungshub von etwa dem Doppelten des Scheitelwerts der Ladespannung erzielen. Somit erhält das Ladekennungssignal einen Spannungshub, der das Doppelte der negativen Ladespannung betragen kann. Weil das Ladekennungssignal einen genügend großen Spannungshub aufweist, kann es zuverlässig - z.B. durch eine Halbleiterlogik - detektiert werden.

Weil während des Ladevorgangs des Energiespeichers kein vollständiges Umladen des Kondensators im Kondensatorkreis stattfinden muss, wird überdies eine entsprechende Belastung der Energiequelle bzw. der Energieversorgung vermieden.

Wenn ein Mikrocontroller zur Detektion des Ladekennungssignals eingesetzt wird, kann das Ladekennungssignal für einen sogenannten Pin-Change-Interrupt verwendet werden. Durch den Pin-Change-Interrupt kann der Mikrocontroller aus dem Sleep-Modus "aufgeweckt" werden, wenn das Ladekennungssignal betragsmäßig eine vorbestimmten Schwelle überschreitet. Somit kann der Mikrocontroller im energiesparenden Sleep-Modus verbleiben, solange das Ladekennungssignal betragsmäßig unterhalb der Schwelle, muss also nicht regelmäßig "aufwachen", um zu prüfen, ob das Gerät mit der Ladestation gekoppelt ist. Dies minimiert den Ruhestrom der Ladevorrichtung.

Ein weiterer Vorteil ist auch, dass hiermit die Frequenz des Ladeteils gemessen werden kann.

Vorteilhafte Weiterbildungen der Schaltung können folgende Merkmale enthalten:

Ein zweites Ventilelement kann vorhanden sein, welches zwischen einer Gleichspannung und dem ersten Ventilelement angeordnet ist und die Spannung über der Energiequelle und dem Kondensatorelement auf die Summe der Gleichspannung und die Durchlassspannung des zweiten Ventilelements begrenzt. Die Gleichspannung kann also zur gezielten Einstellung der maximalen Spannung - also des Spannungshubs - über dem Kondensatorelement und der Energiequelle verwendet werden. Damit kann die Maximalspannung entsprechend der technischen Spezifikation der Erfassungslogik eingestellt werden. Für die Erfassung zweier Zustände kann man dann z.B. bis zu 20 % der Maximalspannung für den "Low"-Status und über 80 % des Maximalwerts für den "High"-Status vorsehen.

Zusätzlich kann eine Steuervorrichtung vorhanden sein, welche zur Erfassung der Spannung über dem Kondensatorelement und der Energiequelle ausgestaltet ist. Die Energiequelle kann ein Spulenelement umfassen, über welches Energie einkoppelbar ist. Dann kann die Ladevorrichtung als induktive Ladevorrichtung für den Energiespeicher ausgestaltet sein. Der Energiespeicher kann ein Akkumulator sein.

Im Ladekreis kann ein drittes Ventilelement zur Gleichrichtung der Ladespannung angeordnet sein, wobei der Kondensatorkreis ladestromaufwärts zum dritten Ventilelement angeordnet ist.

Im Kondensatorkreis kann ein erstes Widerstandselement zur Begrenzung des Ladungsflusses im Kondensatorkreis angeordnet sein.

Das erste Ventilelement und/ oder das zweite Ventilelement kann innerhalb der Steuervorrichtung angeordnet sein. Bei einer Nutzung interner Funktionselemente der Steuervorrichtung kann die Beschaltung mittels externer Dioden entfallen, was den Materialaufwand für die Schaltungsrealisierung weiter verringert.

Das erste Ventilelement kann ein Zenerdioden-Element sein. Dies führt zu einer Begrenzung der positiven Ladekennungsspannung durch die Durchbruchsspannung des Zenerdioden-Elements und zu einer Begrenzung der negativen Ladekennungsspannung durch die Flussspannung des Zenerdioden-Elements.

Parallel zum ersten Ventilelement kann ein Pulldown-Element angeordnet sein, über welches das erste Kondensatorelement entladbar ist, wenn die Schaltungsanordnung nicht mit der Energieversorgung gekoppelt ist. Die definierte vollständige Entladung des Kondensatorelements verbessert die Ladekennung weiter.

Ein Spannungskonverter kann angeordnet sein, welcher zur Speisung der Steuervorrichtung ausgestaltet ist. Dieser kann eingesetzt werden, wenn die Betriebsspannung der Steuervorrichtung höher als die Ladespannung ist.

Zur Speisung der Steuervorrichtung während des Ladens kann der Kondensatorkreis ein viertes Ventilelement in Serie zum ersten Kondensator und ein zweites Kondensatorelement parallel zum ersten Ventilelement umfassen. Dann kann auf den zuvor erwähnten Spannungskonverter zur Speisung der Steuervorrichtung verzichtet werden.

Die Erfindung umfasst auch ein Elektrokleingerät, beispielsweise einen Rasierapparat oder eine elektrische Zahnbürste, mit einer derartigen Schaltungsanordnung.

Im Ladekreis kann ein steuerbares Schaltelement angeordnet sein, welches zum Schalten des Ladestroms ausgestaltet ist. Dann lässt sich der Ladestrom vorteilhafterweise steuern oder regeln, was den Akkumulator schont.

Die Erfindung umfasst auch ein Verfahren zur Ladeerkennung in einer Ladevorrichtung mit einer Energiequelle, welche eine Ladespannung zum Laden eines elektrischen Energiespeichers in einem Ladekreis bereitstellen kann, wenn sie mit einer Energieversorgung gekoppelt ist, wobei die Ladespannung durch eine Wechselgröße repräsentierbar ist, wobei ein erstes Kondensatorelement durch die Energiequelle über ein erstes Ventilelement geladen wird, wenn die Ladespannung negativ ist, so dass, wenn die Ladespannung positiv ist, im Kondensatorkreis die Spannung über dem ersten Kondensatorelement vorzeichenmäßig die gleiche Orientierung hat wie die Ladespannung, und die Spannung über dem Kondensatorelement und der Energiequelle durch eine Steuervorrichtung erfasst wird.

Vorzugsweise begrenzt ein zweites Ventilelement, welches zwischen einer Gleichspannung und dem ersten Ventilelement angeordnet ist, die Spannung über der Energiequelle und dem Kondensatorelement auf die Summe der Spannung der Gleichspannung und die Durchlaßspannung des zweiten Ventilelements. Die Spannung über dem Kondensatorelement und der Energiequelle wird vorzugsweise mittels einer Steuervorrichtung erfasst. Die Ladespannung wird vorzugsweise mittels eines dritten Ventilelements gleichgerichtet. Vorzugsweise wird das erste Kondensatorelement über ein Pulldown-Element, welches parallel zum ersten Ventilelement angeordnet ist, entladen, wenn die Schaltungsanordnung nicht mit der Energieversorgung gekoppelt ist. Das Verfahren kann in einem Elektrokleingerät, beispielsweise einer elektrischen Zahnbürste angewendet werden.

### Kurzbeschreibung der Figuren

Die Schaltungsanordnung wird anhand von Ausführungsbeispielen und den Zeichnungen näher erläutert. Es zeigt:
- Fig. 1: ein Schaltbild einer ersten Ausführungsform einer Schaltungsanordnung;
- Fig. 2: Signalverläufe bei der ersten Ausführungsform;
- Fig. 3: Signalverläufe bei der ersten Ausführungsform;
- Fig. 4: ein Schaltbild einer zweiten Ausführungsform einer Schaltungsanordnung;
- Fig. 5: ein Schaltbild einer dritten Ausführungsform einer Schaltungsanordnung; und
- Fig. 6: ein Schaltbild einer vierten Ausführungsform einer Schaltungsanordnung.

### Ausführliche Beschreibung der Figuren

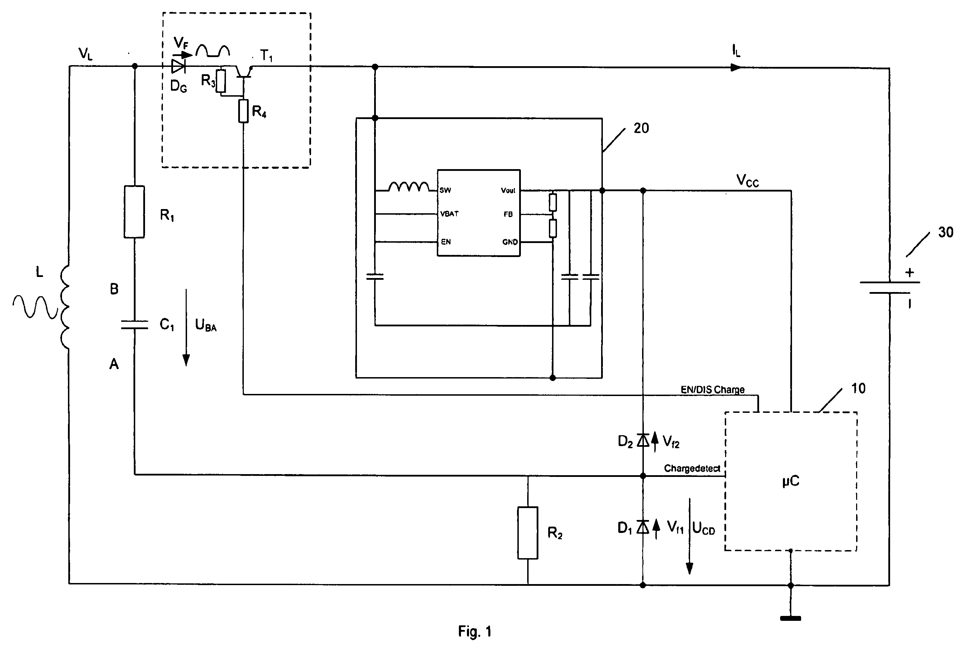

Die erste Ausführungsform der Schaltungsanordnung gemäß Fig. 1 findet vorzugsweise Anwendung in einer elektronischen Schaltung für ein Elektrokleingerät, beispielsweise für eine aufladbare elektrische Zahnbürste oder für einen elektrischen Rasierapparat. Die Energieübertragung von einer Ladestation mit Netzanschluss in die Zahnbürste erfolgt induktiv. Hierzu wird über eine Ladespule L (als Energiequelle) Energie in die Schaltung eingekoppelt, welche durch einen Ladekreis einem Akkumulator 30 zugeführt wird. Das an der Ladespule L vorhandene Potential V_{L} ist eine Wechselgröße. Zur Gleichrichtung des Ladestroms I_{L} vorgesehen ist als Ventilelement eine Diode DG, die im Ladekreis angeordnet ist. Die Diode DG wirkt als Einweg-Gleichrichter, es wird also nur eine Halbwelle durchgelassen und zum Laden des Akkumulators 30 verwendet. Der Ladestrom I_{L} wird durch einen Ladetransistor T1 als Schaltelement im Ladekreis ein- und ausgeschaltet, der seinerseits mittels eines Mikrocontrollers 10 gesteuert wird.

Des Weiteren ist ein Gleichspannungswandler (Boost Converter) 20 vorgesehen, welcher den Mikrocontroller 10 mit einer Betriebsspannung V_{cc} versorgt, die höher ist als die Akkumulatorspannung. Der Gleichspannungswandler 20 wird aus dem Akkumulator 30 versorgt.

Wenn das Gerät an der Ladestation ist, ergeben sich an der Ladespule L der Leerlaufwert V_{I} als Ladespannung V_{L}, nämlich wenn kein Akkumulator-Ladestrom I_{L} fließt, oder U_{A} (Akkumulatorspannungsniveau) + U_{CE} (Kollektor-Emitter-Spannung des Transistors T1) + U_{F} (Flussspannung über der Diode DG) bei der positiven Halbwelle der Ladespannung V_{L}, wenn Akkumulator-Ladestrom I_{L} fließt. Während der positiven Halbwelle der Ladespannung wird der Ladekreis dann belastet, so dass die Ladespannung V_{L} abfällt. Demgegenüber hat die negative Halbwelle immer eine höhere Scheitelspannung, da kein Ladestrom in den Akkumulator fließt (denn die Diode DG sperrt), die Quelle also nicht belastet wird.

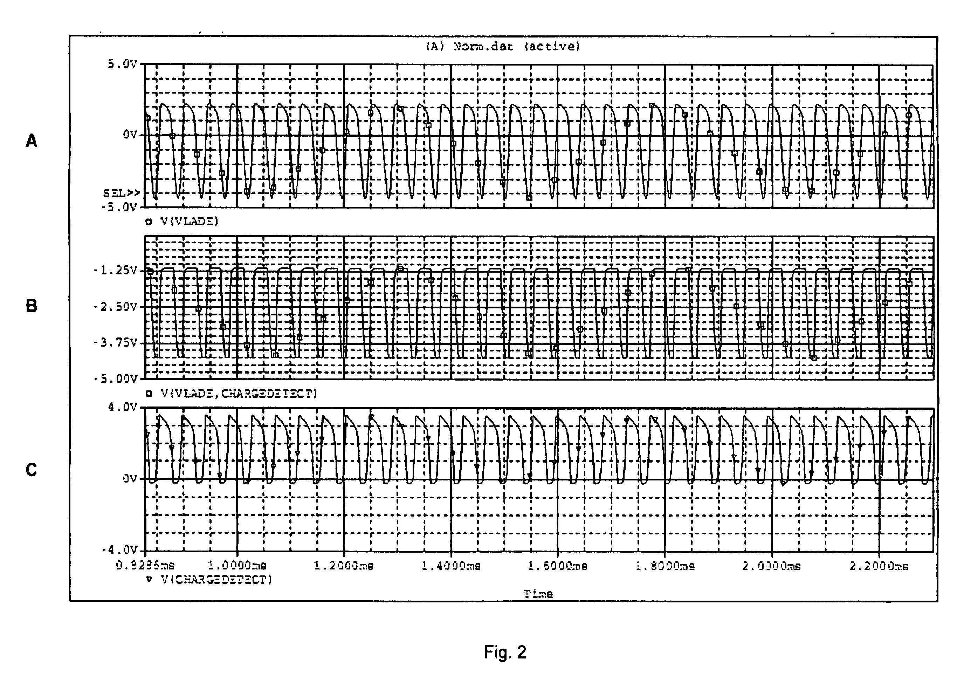

Der Verlauf der Ladespannung V_{L}, wenn Ladestrom fließen kann (Transistor T1 ist durchgeschaltet), über der Zeit ist in Fig. 2 im Diagramm A dargestellt. Im Beispiel pendelt die Ladespannung also zwischen etwa 1,35V und - 4,5V.

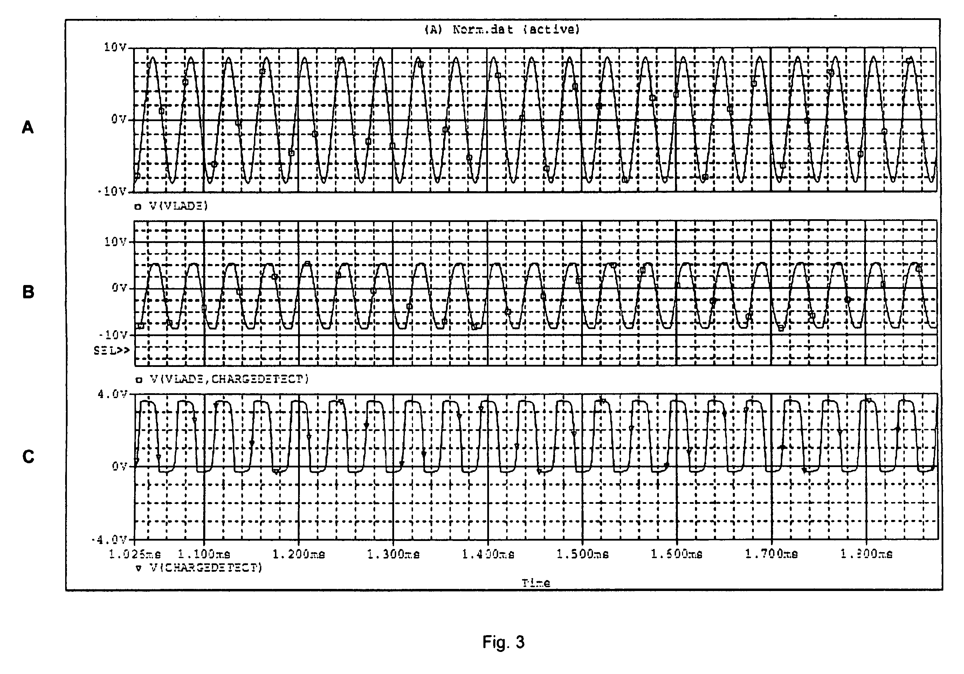

Der Verlauf der Ladespannung V_{L}, wenn kein Ladestrom in den Akkumulator 30 fließen kann (Transistor T1 ist stationär gesperrt), über der Zeit ist in Fig. 3 im Diagramm A dargestellt. In diesem Fall befindet sich der Ladekreis im Leerlauf, so dass die Ladespannung mit beiden Halbwellen den Maximalbetrag |V_{I}| erreicht, im Beispiel sind dies etwa 9V. Der Scheitelwert der negativen Halbwelle, wenn Akkumulator-Ladestrom I_{L} fließt, ist betragsmäßig kleiner als die "echte" Leerlaufspannung, wenn also kein Ladestrom I_{L} fließt, weil ein in einer externen Ladestation befindlicher (in den Figuren nicht dargestellter) Oszillator, der über die Ladespule L die Energie einkoppelt, seinerseits nur während der positiven Halbwelle Energie erhält und dann während der negativen Halbwelle nur noch ausschwingt.

Der Kondensatorkreis umfasst eine Reihenschaltung von Kondensator C1, Widerstand R1 (kann auch fehlen), erstes Diodenelement D1 sowie die Ladespule L. Diese Elemente bilden also eine Masche. Als Ladekennungssignal wird die Spannung U_{CD} verwendet, die über der Spule L und dem Kondensator C1 im Kondensatorkreis bzw. in der Masche abfällt. Das Ladekennungssignal U_{CD} ist bezeichnend dafür, ob sich das Gerät auf der Ladestation befindet oder nicht. Das Ladekennungssignal U_{CD} wird dem Mikrocontroller 10 zugeführt, der dieses auswertet.

Kondensator C1 ist spannungsmäßig unsymmetrisch an dem Mikrocontroller 10 angeschlossen, und zwar über eine zweite Diode D2, die an einer Gleichspannung V_{CC} liegt, und die erste Diode D1. Dies wird durch die Diagramme B der Fig. 2 und Fig. 3 illustriert, in welchen der Spannungsverlauf U_{BA} über dem Kondensator C1 aufgetragen ist. Die Kurven gemäß den Diagrammen B in Fig. 2 und Fig. 3 sind nahezu gleichphasig zu den Kurven gemäß den Diagrammen A. In dem Kondensatorkreis sind also die Ladespannung V_{L} und U_{BA} gleich orientiert, haben also das gleiche Vorzeichen.

Hierdurch lädt sich der Kondensator C1, wenn das Gerät an der Ladestation ist, auf. Während der positiven Halbwelle der Ladespannung V_{L} beträgt die Spannung dann U_{CD} = V_{cc} +V_{f2} (V_{f2} Flußspannung über Diode D2). Während der negativen Halbwelle der Ladespannung V_{L} beträgt die Spannung U_{CD} = -V_{f1} (Flußspannung über Diode D1). Der Spannungsverlauf des Ladekennungsignals U_{CD} ist in Fig. 2 und Fig. 3 jeweils im Diagramm C dargestellt.

Die Ladekennungsspannung U_{CD} am Pin "Chargedetect" des Mikrocontrollers 10 schwankt also zwischen V_{CC} + V_{f2} und der negativen Flussspannung über der Diode D1 (-V_{f1}). Der Betrag der Ladespannung V_{L} kann viel kleiner sein als V_{CC} + V_{f2}, spielt also keine Rolle für die Erfassbarkeit der Ladekennung.

Die Ladekennungsspannung U_{CD} erreicht also die Größenordnung der Spannung V_{cc} und ist somit ein zuverlässig auswertbares Signal (mit genügend großem Hub) für das Vorhandensein der Ladespannung V_{L}. bzw. den Ladestromfluss I_{L} (wenn der Ladetransistor T1 durchgeschaltet ist) im Ladekreis.

Wie ein Vergleich der beiden Kurven der Ladekennungsspannung U_{CD} gemäß Fig. 2C und Fig. 3C zeigt, ist der Spannungshub praktisch unabhängig davon, ob gerade ein Ladestrom I_{L} fließt oder nicht. Wichtig ist nur, dass die Ladespannung V_{L} vorhanden ist, was gleichbedeutend mit dem Zustand "Gerät auf Ladestation" ist. Dann hat die Ladekennungsspannung U_{CD} den Maximalwert.

Solange das Gerät - im Beispiel die elektrische Zahnbürste - nicht an der Ladestation ist, ist die Ladekennungsspannung U_{CD} dauerhaft "Null".

Die Ladespannung V_{L} und somit auch die Ladekennungsspannung U_{CD} hat typisch eine Frequenz in der Größenordung von 30kHz. Weil vom Verlauf der Ladekennungsspannung lediglich der Maximalwert interessiert, nicht aber die Frequenz, kann das Ladekennungssignal über eine Steuerelektronik erfasst werden.

Der Widerstand R1 begrenzt den Ladungsfluss im Kondensatorkreis, also den Strom im Port des Mikrocontrollers 10. Parallel zur Diode D1 im Kondensatorkreis ist ein Widerstand R2 angeordnet. Widerstand R2 ist ein Pulldown-Widerstand, der für ein vollständiges Entladen des Kondensators C1 beim Entfall des Ladekennungssignals U_{CD} sorgt, wenn also das Gerät nicht mehr mit der Ladestation gekoppelt ist.

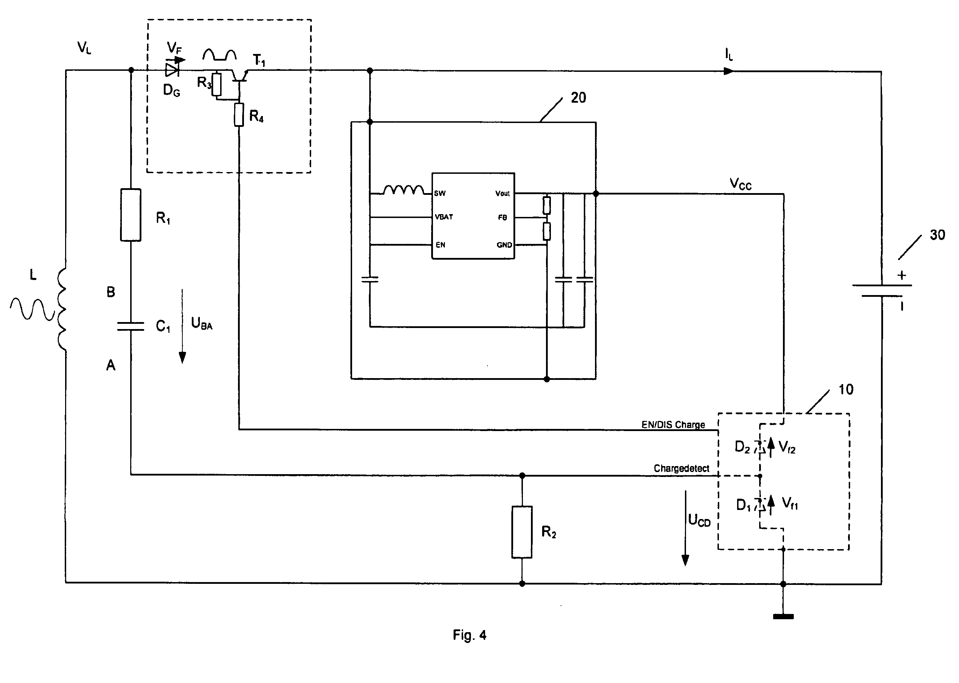

Fig. 4 zeigt eine zweite Ausführungsform der Schaltungsanordnung, bei welcher beide Dioden D1 und D2 im Mikrocontroller 10 integriert sind. Dann können sie in der externen Beschaltung entfallen.

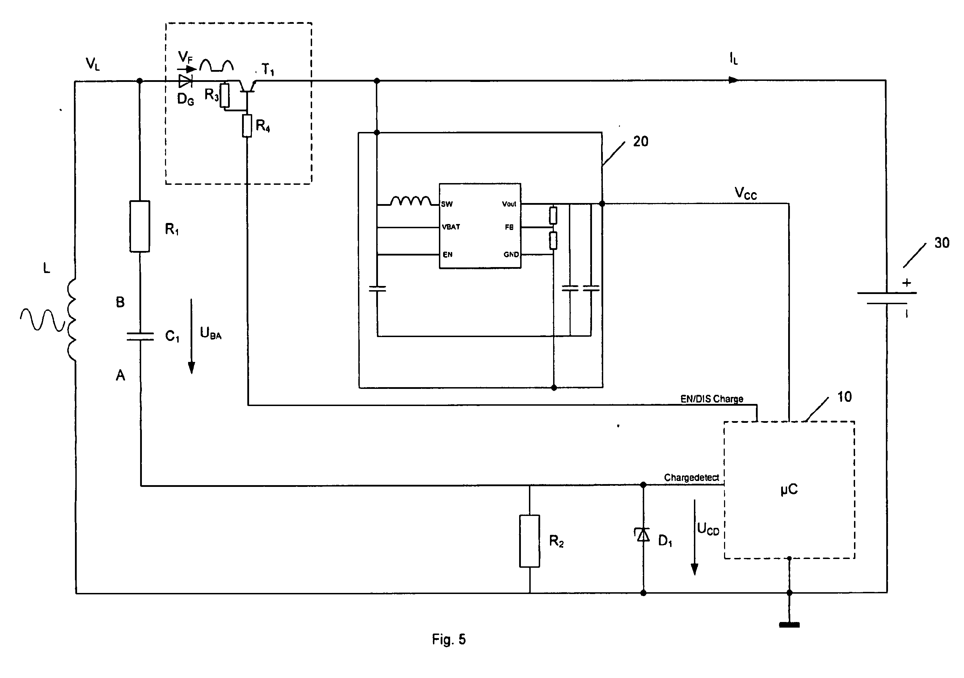

Fig. 5 zeigt eine dritte Ausführungsform der Schaltungsanordnung, bei welcher die Diode D1 als Zenerdiode ausgestaltet ist Hierbei wird die positive Spannung am Pin "Chargedetect" auf die Durchbruchspannung der Zenerdiode begrenzt und die negative Spannung durch die Flussspannung der Zenerdiode in Durchlassrichtung.

Je nach Auslegung der Ladespulenspannung und des Widerstands R1 kann die Ladekennung relativ hochohmig sein, so dass diese das Ladeteil kaum belastet.

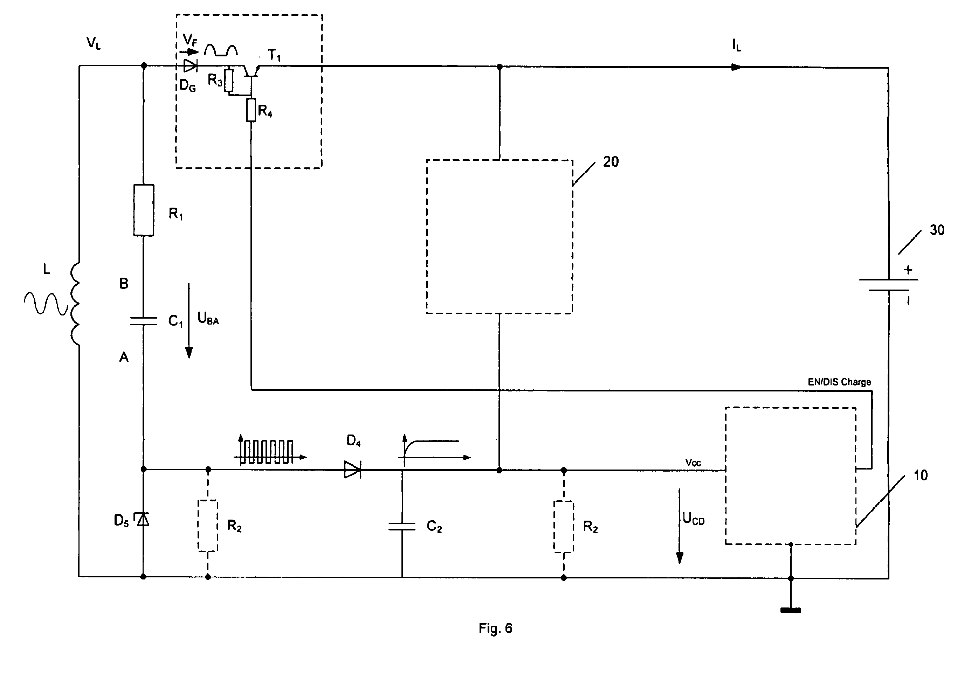

Des Weiteren kann die dritte Ausführungsform dahingehend abgewandelt werden, dass der Kondensatorkreis als Stromversorgung für eine Schaltung verwendet werden kann, wenn das Gerät mit der Ladestation gekoppelt ist. Fig. 6 zeigt diese Variante als vierte Ausführungsform einer Schaltungsanordnung. In den Kondensatorkreis ist eine Gleichrichterdiode D4 geschaltet, und eine Kapazität C2 liegt parallel zu einer Zener-Diode D5, die die Funktion der in den Figuren 1, 4 und 5 dargestellten Diode D1 hat. Die Kapazität C2 und die Diode D4 bilden einen Gleichrichter im Kondensatorkreis, die Diode D4 dient der Gleichrichtung des Stroms im Kondensatorkreis. Die Zener-Diode D5 begrenzt die Summe der Spannung U_{CD} und Diodenspannung V_{f4} auf ihre Durchbruchsspannung.

Der Widerstand R1 und die Kapazität C1 sind in diesem Fall so anzupassen, dass ausreichend Ladung fließen kann. Je nach Auslegung der Schaltung kann der Widerstand R1 aber ganz entfallen.

Bei allen Ausführungsformen kann zur Auswertung des Ladekennungssignals anstelle eines Mikrocontrollers 10 eine andere Logik verwendet werden - analog oder digital. Des Weiteren kann der Spannungswandler 20 anderweitig ausgestaltet sein, es muss kein "Boost Converter" sein. Element 20 steht dann für ein beliebiges Element, das die Spannung des Akkumulators 30 auf das benötigte Niveau für die Versorgungsspannung V_{cc} der Einheit 10 bringt.

Bei allen Ausführungsformen ist der Ladetransistor T1 nur optional, kann also weggelassen werden. Wenn der Ladetransistor T1 nicht vorhanden ist, entfällt zwar die Möglichkeit der Ladesteuerung bzw. Ladekontrolle des Akkumulators, die Funktion der Ladeerkennung bleibt jedoch erhalten.

Des Weiteren funktioniert die beschriebene Ladeerkennung auch bei einem Lademechanismus mit Vollwellen-Gleichrichtung anstelle der Einweg-Gleichrichtung durch die Diode DG. Dann ist der Kondensatorkreis im Dioden-Ast der einen Halbwelle angeordnet, überwacht also nur das Ladeteilsignal der einen Halbwelle.

Die beschriebenen Schaltungen sind nicht auf den Einsatz in elektrischen Zahnbürsten beschränkt. Vielmehr kann sie auch in anderen Geräten wie z.B. Rasierapparaten, Haushaltsgeräten oder Kommunikationsgeräten verwendet werden.

## Patentansprüche

1. Schaltungsanordnung, aufweisend:
eine Energiequelle (L), welche eine Ladespannung (V_{L}) zum Laden eines elektrischen Energiespeichers (30) in einem Ladekreis bereitstellt, wenn sie mit einer Energieversorgung gekoppelt ist, wobei die Ladespannung (V_{L}) durch eine Wechselgröße repräsentierbar ist,
einen Kondensatorkreis mit einem ersten Kondensatorelement (C1), einem ersten Ventilelement (D1) und der Energiequelle (L),
wobei das erste Kondensatorelement (C1) durch die Energiequelle (L) über das erste Ventilelement (D1) geladen wird,
**dadurch gekennzeichnet, daß**
das erste Kondensatorelement (C1) durch die Energiequelle (L) über das erste Ventilelement (D1) geladen wird, wenn die Ladespannung (V_{L}) negativ ist, so dass, wenn die Ladespannung (V_{L}) positiv ist, im Kondensatorkreis die Spannung (U_{BA}) über dem ersten Kondensatorelement (C1) vorzeichenmäßig die gleiche Orientierung hat wie die Ladespannung (V_{L}), und daß
die Spannung (U_{CD}) über dem Kondensatorelement (C1) und der Energiequelle (L) durch eine Steuervorrichtung (10) erfassbar ist.

2. Schaltungsanordnung gemäß Anspruch 1, wobei ein zweites Ventilelement (D2) vorhanden ist, welches zwischen einer Gleichspannung (V_{cc}) und dem ersten Ventilelement (D1) angeordnet ist und die Spannung über der Energiequelle (L) und dem Kondensatorelement (C1) auf die Summe der Gleichspannung (V_{cc}) und die Durchlassspannung (V_{f2}) des zweiten Ventilelements (D2) begrenzt.

3. Schaltungsanordnung gemäß einem der vorherigen Ansprüche, wobei, wenn die Ladespannung (V_{L}) negativ ist, die Spannung (U_{CD}) über dem ersten Ventilelement (U_{CD}) auf die Durchlassspannung (V_{f1}) des ersten Ventilelements (D1) begrenzt ist.

4. Schaltungsanordnung gemäß einem der vorherigen Ansprüche weiter aufweisend eine Steuervorrichtung (10), welche zur Erfassung der Spannung (U_{CD}) über dem Kondensatorelement (C1) und der Energiequelle (L) ausgestaltet ist.

5. Schaltungsanordnung gemäß einem der vorherigen Ansprüche, wobei die Energiequelle (L) ein Spulenelement umfasst, über welches Energie einkoppelbar ist.

6. Schaltungsanordnung gemäß einem der vorherigen Ansprüche, wobei im Ladekreis ein drittes Ventilelement (DG) zur Gleichrichtung der Ladespannung (V_{L}) angeordnet ist, wobei der Kondensatorkreis stromaufwärts zum dritten Ventilelement (DG) angeordnet ist.

7. Schaltungsanordnung gemäß einem der vorherigen Ansprüche, wobei im Kondensatorkreis ein erstes Widerstandselement (R1) zur Begrenzung des Ladungsflusses im Kondensatorkreis angeordnet ist.

8. Schaltungsanordnung gemäß einem der vorherigen Ansprüche, wobei das erste Ventilelement (D1) und/ oder das zweite Ventilelement (D2) innerhalb der Steuervorrichtung (10) angeordnet ist.

9. Schaltungsanordnung gemäß einem der vorherigen Ansprüche, wobei das erste Ventilelement (D1) eine Zenerdiode ist.

10. Schaltungsanordnung gemäß einem der vorherigen Ansprüche, wobei parallel zum ersten Ventilelement (D1) ein Pulldown-Element (R2) angeordnet ist, über welches das erste Kondensatorelement (C1) entladbar ist, wenn die Schaltungsanordnung nicht mit der Energieversorgung gekoppelt ist.

11. Schaltungsanordnung gemäß einem der vorherigen Ansprüche, wobei ein Spannungskonverter (20) angeordnet ist, welcher zur Speisung der Steuervorrichtung (10) ausgestaltet ist.

12. Schaltungsanordnung gemäß einem der vorherigen Ansprüche, wobei zur Speisung der Steuervorrichtung (10) der Kondensatorkreis ein viertes Ventilelement (D4) in Serie zum ersten Kondensatorelement (C1) und ein zweites Kondensatorelement (C2) parallel zum ersten Ventilelement (D1) umfasst.

13. Schaltungsanordnung gemäß einem der vorherigen Ansprüche, wobei die Schaltungsanordnung in einem elektrischen Kleingerät, insbesondere einer Zahnbürste, angeordnet ist und der Energiespeicher (30) ein Akkumulator ist.

14. Schaltungsanordnung gemäß einem der vorherigen Ansprüche, wobei im Ladekreis ein steuerbares Schaltelement (T1) angeordnet ist, welches zum Schalten des Ladestroms (I_{L}) ausgestaltet ist.

15. Verfahren zur Ladeerkennung in einer Schaltungsanordnung mit einer Energiequelle (L), welche eine Ladespannung (V_{L}) zum Laden eines elektrischen Energiespeichers (30) in einem Ladekreis bereitstellt, wenn sie mit einer Energieversorgung gekoppelt ist, wobei die Ladespannung (V_{L}) durch eine Wechselgröße repräsentierbar ist, wobei ein erstes Kondensatorelement (C1) durch die Energiequelle (L) über ein erstes Ventilelement (D1) geladen wird, **dadurch gekennzeichnet, daß** das erste Kondensatorelement (C1) durch die Energiequelle (L) über das erste Ventilelement (D1) geladen wird, wenn die Ladespannung (V_{L}) negativ ist, so dass, wenn die Ladespannung (V_{L}) positiv ist, im Kondensatorkreis die Spannung (U_{BA}) über dem ersten Kondensatorelement (C1) vorzeichenmäßig die gleiche Orientierung hat wie die Ladespannung (V_{L}), und daß die Spannung (U_{CD}) über dem Kondensatorelement (C1) und der Energiequelle (L) durch eine Steuervorrichtung (10) erfasst wird.

16. Verfahren gemäß Anspruch 15, wobei ein zweites Ventilelement (D2) vorhanden ist, welches zwischen einer Gleichspannung (V_{cc}) und dem ersten Ventilelement (D1) angeordnet ist und die Spannung über der Energiequelle (L) und dem Kondensatorelement (C1) auf die Summe der Spannung der Gleichspannung (V_{cc}) und die Durchlassspannung (V_{f2}) des zweiten Ventilelements (D2) begrenzt.

17. Verfahren gemäß einem der Ansprüche 15 bis 16, wobei die Ladespannung (V_{L}) mittels eines dritten Ventilelements (DG) gleichgerichtet wird.

18. Verfahren gemäß einem der Ansprüche 15 bis 17, wobei das erste Kondensatorelement (C1) über ein Pulldown-Element (R2), welches parallel zum ersten Ventilelement (D1) angeordnet ist, entladen wird, wenn die Schaltungsanordnung nicht mit der Energieversorgung gekoppelt ist.

19. Verfahren gemäß einem der Ansprüche 15 bis 18, welches in einem Elektrokleingerät, beispielsweise einer elektrischen Zahnbürste angewandt wird.

## Claims

1. A circuit arrangement having:
an energy source (L) that provides a charging voltage (VL) for charging an electrical energy storage unit (30) in a charging circuit when it is coupled with an energy supply, wherein it is possible to represent the charging voltage (VL) via an alternating quantity,
a capacitor circuit having a first capacitor element (C1), a first valve element (D1), and the energy source (L),
wherein the first capacitor element (C1) is charged by the energy source (L) via the first valve element (D1),
**characterized in that**
the first capacitor element (C1) is charged by the energy source (L) via the first valve element (D1) when the charging voltage (VL) is negative, such that when the charging voltage (VL) is positive, the voltage (UBA) across the first capacitor element (C1) has the same orientation (in terms of sign) in the capacitor circuit as the charging voltage (VL), and **in that**
the voltage (UCD) across the capacitor element (C1) and the energy source (L) can be detected via a control apparatus (10).

2. The circuit arrangement according to claim 1, wherein a second valve element (D2) is arranged between a direct voltage (VCC) and the first valve element (D1) and limits the voltage across the energy source (L) and the capacitor element (C1) to the sum of the direct voltage (VCC) and the on-state voltage (Vf2) of the second valve element (D2).

3. The circuit arrangement according to any one of the preceding claims, wherein when the charging voltage (VL) is negative the voltage (UCD) across the first valve element (UCD) is limited to the on-state voltage (Vf1) of the first valve element (D1).

4. The circuit arrangement according to any one of the preceding claims, additionally having a control apparatus (10) which is designed to detect the voltage (UCD) across the capacitor element (C1) and the energy source (L).

5. The circuit arrangement according to any one of the preceding claims, wherein the energy source (L) comprises a coil element via which energy may be injected.

6. The circuit arrangement according to any one of the preceding claims, wherein a third valve element (DG) for rectifying the charging voltage (VL) is arranged in the charging circuit, wherein the capacitor circuit is arranged upstream (in terms of the current) of the third valve element (DG).

7. The circuit arrangement according to any one of the preceding claims, wherein a first resistor element (R1) to limit the charging flow in the capacitor circuit is arranged in the capacitor circuit.

8. The circuit arrangement according to any one of the preceding claims, wherein the first valve element (D1) and/or the second valve element (D2) is arranged within the control apparatus (10).

9. The circuit arrangement according to any one of the preceding claims, wherein the first valve element (D1) is a Zener diode.

10. The circuit arrangement according to any one of the preceding claims, wherein a pull-down element (R2) is arranged parallel to the first valve element (D1), via which pull-down element (R2) the first capacitor element (C1) may be discharged if the circuit arrangement is not connected to the energy supply.

11. The circuit arrangement according to any one of the preceding claims, wherein a voltage converter (20) is arranged that is designed to supply the control apparatus (10).

12. The circuit arrangement according to any one of the preceding claims, wherein to feed the control apparatus (10) the capacitor circuit comprises a fourth valve element (D4) in series with the first capacitor element (C1), and a second capacitor element (C2) parallel to the first valve element (D1).

13. The circuit arrangement according to any of the preceding claims, wherein the circuit arrangement is arranged in a small electrical device, in particular an electric toothbrush, and the energy storage unit (30) is a battery.

14. The circuit arrangement according to any of the preceding Claims, wherein a controllable circuit element (Tl) that is designed for switching the charging current (IL) is arranged in the charging circuit.

15. Method for charge detection in a circuit arrangement having an energy source (L) that can provide a charging voltage (VL) for charging an electrical energy storage unit (30) in a charging circuit when it is coupled with an energy supply, wherein it is possible to represent the charging voltage (VL) via an alternating quantity, wherein a first capacitor element (C1) is charged by the energy source (L) via a first valve element (D1), **characterized in that** the first capacitor element (C1) is charged by the energy source (L) via the first valve element (D) when the charging voltage (VL) is negative, such that when the charging voltage (VL) is positive, the voltage (UBA) across the first capacitor element (C1) has the same orientation (in terms of sign) in the capacitor circuit as the charging voltage (VL), and the voltage (UCD) across the capacitor element (C1) and the energy source (L) is detected by a control apparatus (10).

16. Method according to claim 15, wherein a second valve element (D2) is present that is arranged between a direct voltage (VCC) and the first valve element (D1), which second valve element (D2) limits the voltage across the energy source (L) and the capacitor element (C1) to the sum of the voltage of the direct voltage (VCC) and the on-state voltage (Vf2) of the second valve element (D2).

17. Method according to claim 15 or 16, wherein the charging voltage (VL) is rectified by a third valve element (DG).

18. Method according to any one of the claims 15 to 17, wherein - when the circuit arrangement is not connected to the energy supply - the first capacitor element (C1) is discharged via a pull down element (R2) that is arranged parallel to the first valve element (D1 ).

19. Method according to any one of the claims 15 to 18 that is used in a small electrical device, for example an electric toothbrush.

## Revendications

1. Montage électrique, comprenant:
une source d'énergie (L) fournissant une tension de charge (V_{L}) pour la charge d'un dispositif de stockage d'énergie électrique (30) dans un circuit de charge,
lorsqu'elle est couplée à une alimentation en énergie, où la tension de charge (V_{L}) peut être représentée par une grandeur alternative,
un circuit de condensateur avec un premier élément de condensateur (C1), un premier élément de clapet (D1) et la source d'énergie (L),
dans lequel le premier élément de condensateur (C1) est charge par la source d'énergie (L) à l'aide du premier élément de clapet (D1),
**caractérisé en ce que**
le premier élément de condensateur (C1) est charge par la source d'énergie (L) à l'aide du premier élément de clapet (D1) lorsque la tension de charge (V_{L}) est négative, de sorte que lorsque la tension de charge (V_{L}) est positive, la tension (U_{BA}) au-dessus du premier élément de condensateur (C1) dans le circuit de condensateur présente la même orientation que la tension de charge (V_{L}) quant au signe, et
la tension (UCD) au-dessus de l'élément de condensateur (C1) et de la source d'énergie (L) peut être déterminée par un dispositif de commande (10).

2. Montage électrique selon la revendication 1, dans lequel est prévu un deuxième élément de clapet (D2) monté entre une tension continue (V_{CC}) et le premier élément de clapet (D1) et limitant la tension au-dessus de la source d'énergie (L) et de l'élément de condensateur (C1) à la somme de la tension continue (V_{cc}) et de la tension de passage (V_{f2}) du premier élément de clapet (D2).

3. Montage électrique selon l'une des revendications précédentes, dans lequel, lorsque la tension de charge (V_{L}) est négative, la tension (U_{CD}) au-dessus du premier élément de clapet (U_{CD}) est limitée à la tension de passage (V_{f1}) du premier élément de clapet (D1).

4. Montage électrique selon l'une des revendications précédentes, comprenant en outre un dispositif de commande (10) conçu pour la détermination de la tension (U_{CD}) au-dessus de l'élément de condensateur (C1) et de la source d'énergie (L).

5. Montage électrique selon l'une des revendications précédentes, dans lequel la source d'énergie (L) comprend un élément de bobine permettant d'incorporer de l'énergie.

6. Montage électrique selon l'une des revendications précédentes, dans lequel un troisième élément de clapet (DG) est monté dans le circuit de charge, pour le redressement de la tension de charge (V_{L}), le circuit de condensateur étant monté en amont du troisième élément de clapet (DG).

7. Montage électrique selon l'une des revendications précédentes, dans lequel un premier élément de résistance (R1) est monté dans le circuit de condensateur, pour limiter le flux de charge dans le circuit de condensateur.

8. Montage électrique selon l'une des revendications précédentes, dans lequel le premier élément de clapet (D1) et/ou le deuxième élément de clapet (D2) est/sont monté(s) à l'intérieur du dispositif de commande (10).

9. Montage électrique selon l'une des revendications précédentes, dans lequel le premier élément de clapet (D1) est une diode Zéner.

10. Montage électrique selon l'une des revendications précédentes, dans lequel un élément pulldown (R2) est monté parallèlement au premier élément de clapet (D1), permettant de décharger le premier élément de condensateur (C1) lorsque le montage électrique n'est pas couplé à l'alimentation en énergie.

11. Montage électrique selon l'une des revendications précédentes, dans lequel est monté un convertisseur de tension (20) conçu pour l'alimentation du dispositif de commande (10).

12. Montage électrique selon l'une des revendications précédentes, dans lequel, pour l'alimentation du dispositif de commande (10), le circuit de condensateur comprend un quatrième élément de clapet (D4) monté en série par rapport au premier élément de condensateur (C1), ainsi qu'un deuxième élément de condensateur (C2) monté en parallèle par rapport au premier élément de clapet (D1 ).

13. Montage électrique selon l'une des revendications précédentes, dans lequel le montage électrique est installé dans un petit appareil électrique, en particulier dans une brosse à dents, et le dispositif de stockage d'énergie (30) est un accumulateur.

14. Montage électrique selon l'une des revendications précédentes, dans lequel est monté un élément de commutation commandable (T1), conçu pour la commutation du courant de charge (I_{L}).

15. Procédé pour la reconnaissance de charge dans un montage électrique avec une source d'énergie (L) pouvant fournir une tension de charge (V_{L}) pour la charge d'un dispositif de stockage d'énergie électrique (30) dans un circuit de charge, lorsqu'elle est couplée à une alimentation en énergie, dans lequel la tension de charge (V_{L}) peut être représentée par une grandeur alternative, où un premier élément de condensateur (C1) est chargé par la source d'énergie (L) à l'aide d'un premier élément de clapet (D1), **caractérisé en ce que** le premier élément de condensateur (C1) est chargé par la source d'énergie (L) à l'aide du premier élément de condensateur (C1) lorsque la tension de charge (V_{L}) est négative, de sorte que lorsque la tension de charge (V_{L}) est positive, la tension (U_{BA}) au-dessus du premier élément de condensateur (C1) dans le circuit de condensateur présente la même orientation que la tension de charge (V_{L}) quant au signe, et la tension (U_{CD}) au-dessus de l'élément de condensateur (C1) et de la source d'énergie (L) est déterminée par un dispositif de commande (10).

16. Procédé selon la revendication 15, dans lequel est prévu un deuxième élément de clapet (D2) monté entre une tension continue (V_{CC}) et le premier élément de clapet (D1) et limitant la tension au-dessus de la source d'énergie (L) et de l'élément de condensateur (C1) à la somme de la tension continue (V_{CC}) et de la tension de passage (V_{f1}) du deuxième élément de clapet (D2).

17. Procédé selon la revendication 15 ou 16, dans lequel la tension de charge (VL) est redressée au moyen d'un troisième élément de clapet (DG).

18. Procédé selon l'une des revendications 15 à 17, dans lequel le premier élément de condensateur (C1) est déchargé par un élément pulldown (R2) monté parallèlement au premier élément de clapet (D1), lorsque le montage électrique n'est pas couplé à l'alimentation en énergie.

19. Procédé selon l'une des revendications 15 à 18, lequel est mis en oeuvre dans un petit appareil électrique, par exemple une brosse dents électrique.
